# EUROPEAN PATENT APPLICATION

(11) **EP 4 700 629 A2**
(43) Date of publication of application: **25.02.2026**
(21) Application number: 26151163.8
(22) Date of filing: 27.04.2023
(51) Int. Cl.: G06F 21/62

(54) **SYSTEMS AND METHODS FOR SECURING DATA BY STATELESS TOKENIZATION**

(30) Priority: 28.04.2022 US 202217661118
(62) Divisional of application: 23725908.0
(71) Applicant: Fidelity Information Services, LLC, Jacksonville, Florida 32204 (US)
(72) Inventor: PETKOV, Penko M., Jacksonville, 32204 (US)
(74) Representative: Patel, Nikesh

(57) **Abstract**

A method for securing data by stateless tokenization includes receiving a character string, selecting a character window within the character string, accessing a token table at an index equal to a value of the character window, retrieving, from the token table at the index, a tokenized value, replacing the value of the character window with the tokenized value, shifting the character window by one character in a first direction, accessing the token table at the index equal to the value of the character window, retrieving a tokenized value, replacing the value of the character window with the tokenized value, shifting the character window by one character in a second direction, accessing the token table at the index equal to the value of the character window, retrieving a tokenized value, replacing the value of the character window with the tokenized value, and returning the character string as a tokenized character string.

## Description

### CROSS-REFERENCE TO RELATED APPLICATION

This application claims the benefit of priority to U.S. Application No. 17/661,118 filed on April 28, 2022, which is incorporated herein by reference in its entirety.

### TECHNICAL FIELD

The present disclosure relates generally to the field of secure network transactions and, more particularly, to the stateless generation of such tokens.

### BACKGROUND

One reality of the modern Internet-connected world is that the storage and transfer of sensitive and secure electronic data is potentially vulnerable to data breaches. Further, as electronic systems, such as point of sales ("POS") systems, become more complex, and as hackers become more sophisticated, security concerns are continually increasing.

In the early days of electronic transactions, dedicated magnetic card readers would scan unencrypted sensitive data on a credit card and transfer it to a transaction service for completion of the transaction. These communications were typically made over a dial-up connection and required basic encryption in the reader device in order to maintain security of the packet.

Over time, the reader devices have become more advanced, often with Internet connections and data input ports that enable malware to infect POS terminals. Further, as more and more merchants have moved to transfer data over the Internet, additional security features have been developed.

Most notably, "tokenization" is a means for replacing sensitive data with a "token" of data that may be non-decryptable or non-detokenizable by the merchant or other tokenization users (e.g. because they require third party decryption). Merchants, for example, might not ever store sensitive data themselves, thus enhancing data security.

However, typical "stateful" tokenization systems maintain a database of clear text and token pairs. Such databases must be maintained and secured indefinitely to allow for de-tokenization by lookup in the database. Accordingly, the database will grow monotonically over time as new clear text-token pairs are added. The maintenance and security requirements of the database may place an ever-increasing processing and storage burden on the tokenization systems, possibly leading to degraded performance of the system and increased expense for the organization providing the tokenization service.

The present disclosure is directed to overcoming one or more of these above-referenced challenges.

### SUMMARY OF THE DISCLOSURE

According to certain aspects of the present disclosure, systems and methods are disclosed for securing data by stateless tokenization.

In one embodiment, a computer-implemented method is disclosed for securing data by stateless tokenization, the method comprising: receiving a character string, selecting a character window at a starting point within the character string, accessing a token table at an index equal to a value of the character window, retrieving, from the token table at the index, a first tokenized value corresponding to the value of the character window, replacing the value of the character window within the character string with the retrieved first tokenized value, shifting the character window within the character string by one character in a first direction, accessing the token table at the index equal to the value of the shifted character window, retrieving, from the token table at the index, a second tokenized value corresponding to the value of the shifted character window, replacing the value of the shifted character window within the character string with the retrieved second tokenized value, shifting the shifted character window within the character string by one character in a second direction, accessing the token table at the index equal to the value of the shifted character window, retrieving, from the token table at the index, a third tokenized value corresponding to the value of the shifted character window, replacing the value of the shifted character window within the character string with the retrieved third tokenized value, and returning the character string as a tokenized character string..

In accordance with another embodiment, a system is disclosed for securing data by stateless tokenization, the system comprising: a data storage device storing instructions for securing data by stateless tokenization in an electronic storage medium; and a processor configured to execute the instructions to perform a method including: receiving a character string, selecting a character window at a starting point within the character string, accessing a token table at an index equal to a value of the character window, retrieving, from the token table at the index, a first tokenized value corresponding to the value of the character window, replacing the value of the character window within the character string with the retrieved first tokenized value, shifting the character window within the character string by one character in a first direction, accessing the token table at the index equal to the value of the shifted character window, retrieving, from the token table at the index, a second tokenized value corresponding to the value of the shifted character window, replacing the value of the shifted character window within the character string with the retrieved second tokenized value, shifting the shifted character window within the character string by one character in a second direction, accessing the token table at the index equal to the value of the shifted character window, retrieving, from the token table at the index, a third tokenized value corresponding to the value of the shifted character window, replacing the value of the shifted character window within the character string with the retrieved third tokenized value, and returning the character string as a tokenized character string..

In accordance with another embodiment, a non-transitory machine-readable medium storing instructions that, when executed by the a computing system, causes the computing system to perform a method for securing data by stateless tokenization, the method including: receiving a character string, selecting a character window at a starting point within the character string, accessing a token table at an index equal to a value of the character window, retrieving, from the token table at the index, a first tokenized value corresponding to the value of the character window, replacing the value of the character window within the character string with the retrieved first tokenized value, shifting the character window within the character string by one character in a first direction, accessing the token table at the index equal to the value of the shifted character window, retrieving, from the token table at the index, a second tokenized value corresponding to the value of the shifted character window, replacing the value of the shifted character window within the character string with the retrieved second tokenized value, shifting the shifted character window within the character string by one character in a second direction, accessing the token table at the index equal to the value of the shifted character window, retrieving, from the token table at the index, a third tokenized value corresponding to the value of the shifted character window, replacing the value of the shifted character window within the character string with the retrieved third tokenized value, and returning the character string as a tokenized character string..

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for securing data by stateless tokenization, according to one or more embodiments.
FIG. 2 depicts an exemplary distributed system infrastructure for securing data by stateless tokenization, according to one or more embodiments.
FIG. 3A depicts an example token table employed in a method of securing data by stateless tokenization, according to one or more embodiments.
FIGS. 3B-3C depict an example process flow of securing data by stateless tokenization, according to one or more embodiments.
FIG. 3D depicts an example reverse token table employed in a method of securing data by stateless tokenization, according to one or more embodiments.
FIG. 3E depicts an example token table file stored on disk and employed in a method of securing data by stateless tokenization, according to one or more embodiments.
FIG. 4 depicts a flowchart of a method of securing data by stateless tokenization, according to one or more embodiments.
FIG. 5 illustrates an implementation of a computer system that may execute techniques presented herein.

### DETAILED DESCRIPTION OF EMBODIMENTS

The following discussion relates to methods and systems for securing data by stateless tokenization. Such methods and systems may, for example, enable merchants to use secure sensitive customer data through tokenization, without burdens on the tokenization service for maintaining a stateful database of tokens and tokenized values.

Tokenization today is used as a method to provide data security for sensitive data. Through tokenization, a requesting client may be given non-sensitive reference data in exchange for the sensitive data elements. The reference data may be considered non-sensitive since the associated sensitive data may only be retrieved through security controls that authenticate and authorize the requestor. This allows clients to store non-sensitive reference data and to offload any sensitive data storage to tokenization providers, reducing auditing requirements as well as any potential sensitive data loss should a security incident occur.

Tokenization has become a popular method for securing payment transaction data (e.g., primary account numbers, etc.) and many disparate token service providers have emerged to provide this functionality. However, typical "stateful" tokenization services rely on maintenance of a database of clear text-token pairs. Such databases must be maintained and secured indefinitely to allow for de-tokenization by lookup in the database. Accordingly, the database will grow monotonically over time as new clear text-token pairs are added. The maintenance and security requirements of the database may place an ever-increasing processing and storage burden on the tokenization systems, possibly leading to degraded performance of the system and increased expense for the organization providing the tokenization service. In addition, the requirement to maintain the database, and the ever-increasing size of the database, makes distributed processing of tokenization services impractical. Such lack of distributed processing may result in a single point of failure for tokenization services, possibly resulting in increasing processing time for the tokenization service, and increasing costs for users of the service. In contrast, a "stateless" tokenization system according to one or more embodiments may avoid these problems by not using a database at all. Instead, such a system may use a limited size static token table to tokenize clear text and detokenize tokens in computer memory.

It should be appreciated that particular consideration is made herein to credit card transactions due to the prevalence of these transactions. Despite this reference to credit cards, the disclosed systems and methods apply equally well to the transfer of any sensitive data, whether "card present" or "card not present" (CNP) transactions, or outside of financial transactions. Within the realm of financial transactions, disclosed systems and methods may apply, for example, in online transactions where a user is not physically present at a merchant location. Transactions may include credit/debit transactions, gift card transactions, PayPal transactions, BitCoin transactions, smart card transactions, mobile application transactions, and the usage of loyalty cards, to name a few. Effectively, any circumstance where sensitive data, such as a primary account number (PAN), social security number, bank routing number, driver's license number, etc., or token corresponding thereto, is being transmitted over a network, systems and methods disclosed herein may be employed. Further, while the party seeking to initiate a secure transaction may be referred to herein as a "merchant," a party seeking to initiate a secure transaction need not be a merchant, but may be a service provider, or any party seeking to execute a transaction.

Application of the disclosed tokenization systems and methods may provide benefits to applications in payments, banking, government benefits (EBT), wealth management, health care management, travel, and any other scenario in which sensitive information is to be stored, transmitted, or otherwise shared.

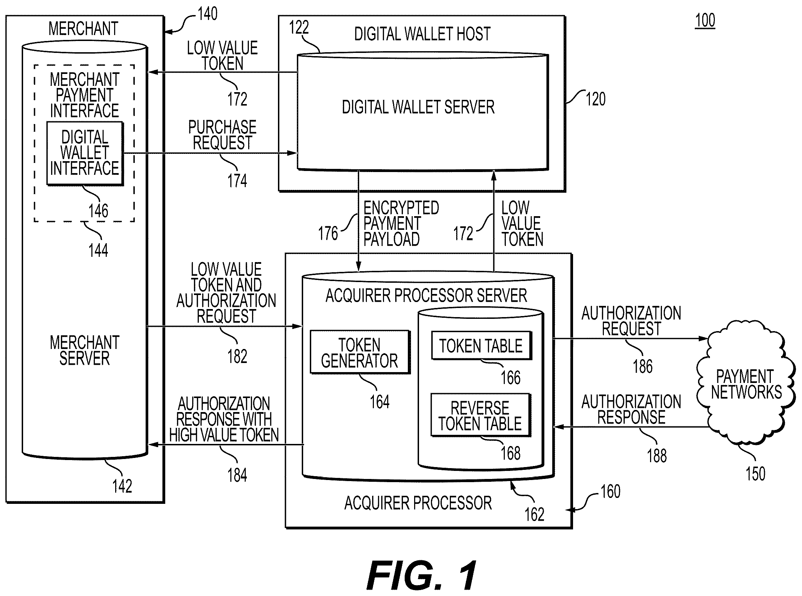

Various non-limiting embodiments of the present disclosure will now be described to provide an overall understanding of the principles of the structure, function, and use of systems and methods disclosed herein for electronic transaction messaging conversion. One or more examples of these non-limiting embodiments are illustrated in the selected examples disclosed and described in detail with reference made to FIGS. 1-5 in the accompanying drawings. Those of ordinary skill in the art will understand that systems and methods specifically described herein and illustrated in the accompanying drawings are non-limiting embodiments. The features illustrated or described in connection with one non-limiting embodiment may be combined with the features of other non-limiting embodiments. Such modifications and variations are intended to be included within the scope of the present disclosure.

The systems, apparatuses, devices, and methods disclosed herein are described in detail by way of examples and with reference to the figures. The examples discussed herein are examples only and are provided to assist in the explanation of the apparatuses, devices, systems and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," "some example embodiments," "one example embodiment, or "in an embodiment" in places throughout the specification are not necessarily all referring to the same embodiment. Furthermore, the particular features, structures or characteristics may be combined in any suitable manner in one or more embodiments.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context. It should be noted that although for clarity and to aid in understanding some examples discussed herein might describe specific features or functions as part of a specific component or module, or as occurring at a specific layer of a computing device (for example, a hardware layer, operating system layer, or application layer), those features or functions may be implemented as part of a different component or module or operated at a different layer of a communication protocol stack. Those of ordinary skill in the art will recognize that the systems, apparatuses, devices, and methods described herein can be applied to, or easily modified for use with, other types of equipment, can use other arrangements of computing systems such as client-server distributed systems, and can use other protocols, or operate at other layers in communication protocol stacks, than are described.

For simplicity, the description that follows will be provided by reference to a "payment vehicle," which generally refers to any type of financial alternative to currency. As is to be clear to those skilled in the art, no aspect of the present disclosure is specifically limited to a specific type of payment vehicle. Therefore, it is intended that the following description encompasses the use of the present disclosure with many other forms of financial alternatives to currency, including credit cards, debit cards, smart cards, single-use cards, pre-paid cards, electronic currency (such as might be provided through a cellular telephone or personal digital assistant), and the like. Payment vehicles can be traditional plastic transaction cards, titanium-containing, or other metal-containing, transaction cards, clear and/or translucent transaction cards, foldable or otherwise unconventionally-sized transaction cards, radio-frequency enabled transaction cards, or other types of transaction cards, such as credit, charge, debit, pre-paid or stored-value cards, or any other like financial transaction instrument. A payment vehicle can also have electronic functionality provided by a network of electronic circuitry that is printed or otherwise incorporated onto or within the payment vehicle (and typically referred to as a "smart card"), or be a fob having a transponder and an RFID reader.

As discussed above tokenization of sensitive data may be of particular interest in relation to financial transactions, such as electronic payment transactions. FIG. 1 is a schematic representation of an example payment system 100 that employs tokenization of sensitive data, such as may be provided by one or more embodiments. Payment system 100 can include a digital wallet host 120, a merchant 140, and an acquirer processor 160. The digital wallet host 120 can include a digital wallet server 122 that hosts/stores a digital wallet (not shown) for a plurality of consumers. Each of the digital wallets can be associated with a consumer and includes login credentials and financial account information for at least one personal financial account of the consumer. The digital wallet server 122 can cause content to be sent to/from the digital wallet host 120 in any number of formats, such as html messages, text-based messages, multimedia message, email messages, smart phone notifications, web pages, and so forth. The digital wallet server 122 can comprise processors (e.g., CPUs), memory units (e.g., RAM, ROM), non-volatile storage systems (e.g., hard disk drive systems), etc. The digital wallet server 122 can utilize operating systems, such as Solaris, Linux, or Windows Server operating systems, for example.

The merchant 140 can include a merchant server 142 that facilitates presentation of a merchant payment interface 144 to a consumer to facilitate initiation of a purchase transaction by the consumer at the merchant 140. The merchant payment interface 144 can be presented to a consumer as a graphical user interface on any of a variety of computing devices such as a mobile device, a point of sale kiosk, or a personal computer, for example. The merchant payment interface 144 can display a digital wallet interface 146 that is linked to the digital wallet host 120. When the consumer selects the digital wallet interface 146 (e.g., by selecting a button displayed on the merchant payment interface 144), a purchase request 174 can be transmitted to the digital wallet server 122. In response, the digital wallet host 120 can present a request for login credentials to the consumer either directly on the merchant payment interface 144 or by redirecting the consumer to a login page hosted by the digital wallet host 120. The digital wallet host 120 can request any of a variety of login credentials such as, for example, a username and password for the consumer's digital wallet account, biometric data (e.g., a fingerprint), or the like. When the consumer submits the correct login credentials to the digital wallet host 120 and finalizes the purchase transaction (e.g., by selecting a "Place Order" button), the digital wallet host 120 can transmit an encrypted payment payload 176 to the acquirer processor 160 via a server-to-server integration. The encrypted payment payload 176 can include identifying information for the consumer's payment vehicle, such as a BIN number, an expiration date, and a first and last name of the account holder, for example. The encrypted payment payload 176 can also include identifying information from the purchase such as an amount and identifying information from the merchant 140, for example. The encrypted payment payload 176 can also include encryption data such as a network token and a cryptograph, for example.

The encrypted payment payload 176 can be sent to an acquirer processor server 162 of the acquirer processor 160. In response, the acquirer processor server 162 can generate a low value token 172 and transmit the low value token 172 to the merchant server 142 via the digital wallet server 122. In one embodiment, the digital wallet server 122 and the acquirer processor server 162 can be back-end integrated to encourage effective and consistent communication between the servers. The low value token 172 can be a temporary (limited life), randomized value that is devoid of consumer financial data (e.g., credit card number, expiration date, or CCV). In one or more embodiments, acquirer processor server 162 may include a token generator 168, which may generate low value token 172 by an appropriate cryptographic means. Generation of low value token 172 may make use of token table 164. Detokenization of low value token 172 to retrieve the tokenized consumer financial data may also be performed by token generator 168, possibly by employing reverse token table 166. The tokenization of consumer financial data to produce low value token 172 will be discussed in further detail below.

Once the consumer finalizes the purchase event, the merchant server 142 can submit an authorization request 182 to the acquirer processor server 162 that includes the low value token 172. The acquirer processor server 162 can then decrypt the encrypted payment payload 176 to reveal the consumer's consumer data. The acquirer processor server 162 can then transmit an authorization request 186 for the purchase transaction to a payment network 150 that facilitates processing of a payment for the purchase transaction. The authorization request 186 can include identifying information for the consumer's payment vehicle, such as a BIN number, an expiration date, and a first and last name of the account holder, for example. The authorization request 186 can also include identifying information from the purchase such as an amount and identifying information from the merchant 140, for example. The payment network 150 can be, for example, a network of a credit card associations affiliated with the consumers PCIDSS data. Non-limiting examples of credit card associations include VISA, MASTERCARD, DISCOVER, and AMERICAN EXPRESS. Using information from the authorization request 186, an issuer financial institution (not shown) can associate the purchase transaction with an account of the consumer held by the issuer financial institution. The issuer financial institution can then facilitate transmission of an authorization response 188 from the payment network 150 to the acquirer processor server 162. Upon receiving the authorization response 188, the acquirer processor server 162 can detokenize the low value token 172 received from the merchant server 142 and can convert the detokenized low value token into a high value token. The high value token and an authorization response 184 (indicating the authorization response from the payment networks 150) can be transmitted to the merchant server 142. The authorization response 184 can either be an approval message or a denial message, either of which can complete the purchase transaction. If the purchase transaction is approved, it can be posted to the consumer's account and reconciled later with the digital wallet host 120.

The high value token can be a randomized unique value that is devoid of the consumer's financial data that is subject to PCIDSS (e.g., PCIDSS data) but serves as a surrogate for the consumer's financial data. The high value token can be stored at each of the merchant server 142 and the acquirer processor server 162 such that the same high value token can be used for other of the consumer's purchase transactions until the consumer's financial data changes, such as, for example, when the issuer financial institution issues a different payment vehicle thereby changing the consumer financial data from which the high value token was created. When the consumer's financial data changes, a new high value token can be generated and used for subsequent transactions. The high value token can be stored at the merchant server 142 in lieu of the consumer's financial data such that the merchant 140 does not interact with the consumer's PCIDSS data, thus alleviating the compliance burden of the merchant 140.

The merchant server 142 can cause content to be sent to/from the merchant 140 in any number of formats that facilitate completion of the purchase transaction, such as html messages, text-based messages, multimedia message, email messages, smart phone notifications, web pages, and so forth. The merchant server 142 can comprise processors (e.g., CPUs), memory units (e.g., RAM, ROM), non-volatile storage systems (e.g., hard disk drive systems), etc. The merchant server 142 can also utilize operating systems, such as Solaris, Linux, or Windows Server operating systems, for example. It is to be appreciated that although the merchant server 142 is shown in FIG. 1 to be an individual server, the merchant server 142 can include a plurality of servers. For example, the merchant server 142 can include a webserver for hosting the merchant payment interface and a financial transaction server that communicates with the digital wallet server to exchange transaction-related data.

It is to be appreciated that a plurality of different digital wallet hosts (e.g., 120) can exist on the payment system 100, with each digital wallet host requiring a different criteria and set of rules for processing their particular encrypted payment payload (e.g., 176). The acquirer processor server 162 can be configured to process each of the different encrypted payment payloads (e.g., 176) of the digital wallet hosts (e.g., 120) according to the appropriate criteria and set of rules set forth by each digital wallet host (e.g., 120) which can lead to a uniform mechanism of handling diverse methods of payment for the merchant thus alleviating the burden typically experienced with digital wallet based transactions in a conventional payment network. For example, in a conventional payment network, when a digital wallet based transaction is initiated, the encrypted payment payload (e.g., 176) is sent to the merchant (e.g., 140), and the merchant (e.g., 140) must then determine and apply the appropriate criteria and set of rules to the encrypted payment payload (e.g., 176) to complete the purchase transaction. This can be time consuming and expensive to implement and can result in the merchant (e.g., 140) refusing to accept payment from some if not all digital wallet platforms. In addition, by receiving and processing the encrypted payment payload (e.g., 176), the merchant (e.g., 140) can be exposed to consumer PCIDSS data which can be costly and time consuming to protect appropriately (i.e., according to the PCIDSS guidelines).

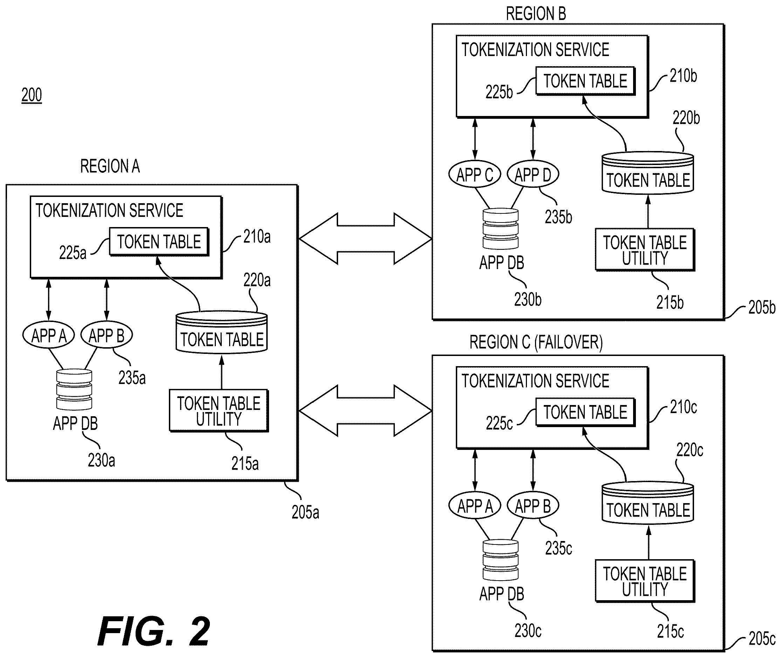

In the embodiment described above with respect to FIG. 1, the tokenization and detokenization of sensitive payment information may be performed entirely within an acquirer processor server, such as that of acquirer processor 160. However, the stateless nature of the present embodiments may allow for the distribution of the token table across multiple systems, such that compatible tokenization and detokenization may be performed by multiple entities, such as for example, an acquirer processor, a merchant, and a payment provider. FIG. 2 depicts such an exemplary distributed system infrastructure for securing data by stateless tokenization, according to one or more embodiments. As shown in FIG. 2, tokenization services may be distributed across multiple regions 205, such as "Region A" 205a. "Region B" 205b, and "Region C" 205c. Each region 205 may include a tokenization service 210, a token table utility 215, and a token table file 220. Each region 205 may provide tokenization services locally within the servers operating in that region, such as to applications 235 instantiated from an application database 230, or may provide tokenization services to outside requestors. Alternatively, a region, such as "Region C" 205c may be designated as a "failover" service provider, such that if tokenization services are unavailable from a "primary" tokenization service provider, such as "Region A" 205a or "Region B" 205b, tokenization services may be provided seamlessly by the "failover" service provider. The applications 235 provided in each region 205 may be the same, such as applications A and B provided as applications 235 in "Region A" 205a and "Region C" 205c, or may be different in different regions, such as applications A and B provided as applications 235 in "Region A" 205a and applications C and D provided as applications 235 in "Region B" 205b.

A token table, such as token table 225 shown in FIG. 2, may be characterized by its entry length n and alphabet base b. For example, 6-digit numeric (base 10) or 3-character alphanumeric (base 62), etc. The number of digits/characters n may determine the minimum clear text/token length. There may be no theoretical maximum clear text/token length. The base b may determine the clear text/token data type. Token table 225, then, may be, for example, an array of bⁿ random numbers, ranging from 0 to bⁿ-1. Each number is unique within the array, randomly assigned to its array index and different than its index. To ensure the security and proper operation of the tokenization process, the random numbers may be generated by a cryptographic means, such as by a cryptographically secure counter mode deterministic random bit generator (CTR_DRBG). Such a CTR_DRBG may use, for example, an Advanced Encryption Standard (AES) encryption such as AES-256 in counter mode with a 384-bit seed. The seed may be derived by any cryptographically secure means, such as, for example, as derived from the current time, code/local variable/dynamically allocated memory addresses, and/or CPU timing, etc. A reverse tokenization table (not shown in FIG. 2), used to retrieve the original clear text from the tokenized value, may be generated as an inverted copy of token table 225. To ensure compatibility, and to provide to de-tokenization, unique taken tables for each combination of entry length n and alphabet base b may be maintained. Methods are described below for optionally associating a generated tokenized string with the token table used to produce it.

It should be appreciated that the security of the tokenization may increase as the entry length n and alphabet base b increase. Such security benefits may be realized at least because of an increased size of the token table, which may increase the difficulty of determining a tokenization entry by brute force or by analytic means. For example, for an entry length of 3 numeric digits (base 10), the resulting token table would have 1,000 entries. For an entry length of 6 numeric digits (base 10), the resulting token table would have 1,000,000 entries. For an entry length of 6 alphanumeric digits (base 62), the resulting token table would have 56,800,235,584 entries. The Payment Card Industry (PCI) data security standard requires primary account numbers (PANs) to be protected by keeping at most the first 6 and last 4 digits as clear text, the rest of the PAN digits must be masked, encrypted, or tokenized. PANs most commonly range from 16 to 19 digits, but it is possible to have PANs up to 28 digits. Thus, the middle 6 digits of a 16-digit PAN can be tokenized by using a static token table of one million entries.

If token table 225 is to be written to disk, such as token table file 220, additional measures may be taken to ensure security. For example, a hash of the contents of token table 225 may be appended to token table 225. For example, a Secure Hash Algorithm (SHA) hash, such as a SHA-512 hash, may be used. The combined token table 225 may then be encrypted by any suitable encryption method, such as, for example, AES-256 with cipher block chaining (AES-256-CBC). The encrypted combined token table 225 may then be encoded, such as by base64 encoding, and written to a disk file, such as token table file 220. The table file encryption key may be derived by selecting 32 random bytes from an array of 10,000 random bytes stored in a key file. A 16-byte random initialization vector is derived as well. The key file is generated by the CTR_DRBG used for the table. The key derivation algorithm is coded in a separate module to allow for object-only-no-symbols distribution. Alternatively, the token table file encryption key may be maintained by a hardware Host Security Module.

An encryption key for token table file 220 may be derived, for example, by selecting 32 random bytes from an array of 10,000 random bytes stored in a key file. A 16-byte random initialization vector may be derived as well. The key file may, for example, be generated by the CTR_DRBG used to generate the random numbers for token table 225. The algorithm used for key derivation may be deployed in a separate module to allow for object-only-no-symbols distribution. Alternatively, the token table file encryption key may be maintained by a hardware Host Security Module.

Token table utility 215 may provide utility services related to, for example, generation of a token table from a token table file, generation of a token table file, validation of tokenized values, validation, encryption, re-encryption, exporting, and importing of token tables and token table files, etc. For example, token table file 220 may be exported to another region under a transport encryption key, then may be re-encrypted under a local key of the new region.

To be used in a new region, token table file 220 may be read, decoded, decrypted and SHA verified. Two memory tables may then be created: token table 225 for tokenization operations and an inverted reverse token table (not shown in FIG. 2) for de-tokenization operations. The token table 225 and reverse token table may be obfuscated by a random number providing additional protection.

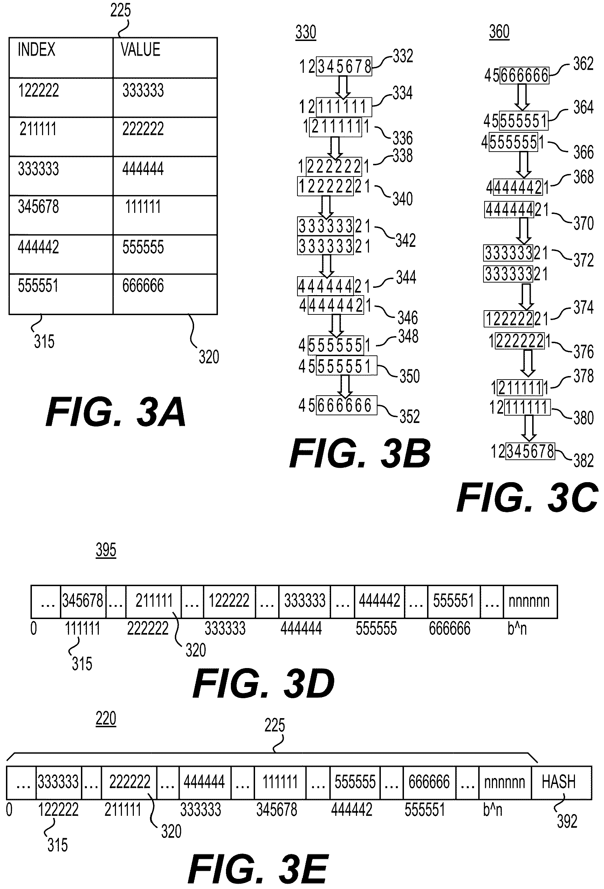

The internal structure of token table file 220, token table 225, and a reverse token table will be discussed in greater detail below with respect to an example process flow of securing data by stateless tokenization, according to one or more embodiments, as depicted in FIGS. 3A-3E.

A stateless tokenization method for securing data, according to one or more embodiments, may take as input two input strings: a context and a clear text. The method may produce a tokenized string. For example, portions of a 16-digit financial account number, "1234-5612-3456-7812", may be tokenized to provide security for the account number. For example, the middle 8 digits, "xxxx-xx12-3456-78xx", may be tokenized, leaving the remaining 8 digits, "1234-56xx-xxxx-xx12", as context for the tokenization

A random number may be used as a table offset during tokenization to ensure that different tokens are generated for the same clear text in different contexts. For example, a SHA-256 hash may be computed over the context. The first 6 bytes of the hash may then be used as an index into token table 225 to retrieve a non-zero n-digit random number. That number may then be used as a table offset during the rest of the tokenization process.

Briefly, given a string of clear text digits/characters, tokenization may start from the right end, reach the left end, and go back to the right end. However, the process could, alternatively, begin at the left end of the clear text and move initially to the right through the clear text. The process may use a sliding n-digit window. At each step, the currently selected n digits may be replaced with the token table value from token table 225 at an index equal to the selected n digits plus the offset. The window may then slide one digit. Any non-alphabet clear text characters may be skipped and preserved in the output token. Clear text strings with lengths less than n digits/characters may not be tokenized and may be copied directly to the output. The algorithm is collision free since the index-random number pairs are a series of bijections. The inverse operation may use an inverted copy of token table 225, the same context logic, and a reversal of the same lookup, replacement, and shift steps.

FIG. 3A depicts a portion of an example token table 225 employed in a method of securing data by stateless tokenization, according to one or more embodiments. As shown in FIG. 3A, token table 225 may include a random number value 320 at each index 315. For example, in example token table 225 at index 211111 is random number value 222222. Although not shown in FIG 3A, a random number value may be provided at each index from 0 to bⁿ-1, for a given entry length n and alphabet base b.

FIG. 3B depicts an example process flow 330 of securing data by stateless tokenization, according to one or more embodiments. This example uses a 6-digit window, but does not use an offset for ease of explanation. As shown in FIG. 3B, at operation 332, the process may select a 6-digit window at the right end of the clear text. At operation 334, the process may use the value of the 6-digit window, "345678", as an index into token table 225, retrieve the random number at that index, "111111", and replace the value of the 6-digit window with the retrieved random number. At operation 336, the process may shift the 6-digit window one digit to the left. At operation 338, the process may use the value of the 6-digit window, "211111", as an index into token table 225, retrieve the random number at that index, "222222", and replace the value of the 6-digit window with the retrieved random number. At operation 340, the process may shift the 6-digit window one digit to the left. At operation 342, the process may use the value of the 6-digit window, "122222", as an index into token table 225, retrieve the random number at that index, "333333", and replace the value of the 6-digit window with the retrieved random number.

At this point the process has reached the left end of the clear text and may continue similarly, while shifting the 6-digit window from left to right.

At operation 344, the process may use the value of the 6-digit window, "333333", as an index into token table 225, retrieve the random number at that index, "444444", and replace the value of the 6-digit window with the retrieved random number. At operation 346, the process may shift the 6-digit window one digit to the right. At operation 348, the process may use the value of the 6-digit window, "444442", as an index into token table 225, retrieve the random number at that index, "555555", and replace the value of the 6-digit window with the retrieved random number. At operation 350, the process may shift the 6-digit window one digit to the right. At operation 352, the process may use the value of the 6-digit window, "555551", as an index into token table 225, retrieve the random number at that index, "666666", and replace the value of the 6-digit window with the retrieved random number.

At this point the process has reached the right end of the clear text and is complete, resulting in the tokenized value "45666666."

FIG. 3D depicts an example reverse token table 395 employed in a process of retrieving clear text from a tokenized value in a method of securing data by stateless tokenization, according to one or more embodiments. As shown in FIG. 3D, reverse token table 395 may include a random number value 320 at each index 315 from 0 to bⁿ-1, for a given entry length n and alphabet base b. As shown in FIGS. 3A and 3D, the index-random number pairs in reverse token table 395 may be the inverse of those in token table 225. For example, in example reverse token table 395 at index 222222 may be random number value 211111.

FIG. 3C depicts an example process flow of retrieving clear text from a tokenized value in a method for securing data by stateless tokenization, according to one or more embodiments. This example uses a 6-digit window, but does not use an offset for ease of explanation.

As shown in FIG. 3C, at operation 362, the process may select a 6-digit window at the right end of the clear text. At operation 364, the process may use the value of the 6-digit window, "666666", as an index into reverse token table 395, retrieve the random number at that index, "555551", and replace the value of the 6-digit window with the retrieved random number. At operation 366, the process may shift the 6-digit window one digit to the left. At operation 368, the process may use the value of the 6-digit window, "555555", as an index into reverse token table 395, retrieve the random number at that index, "444442", and replace the value of the 6-digit window with the retrieved random number. At operation 370, the process may shift the 6-digit window one digit to the left. At operation 372, the process may use the value of the 6-digit window, "444444", as an index into reverse token table 395, retrieve the random number at that index, "333333", and replace the value of the 6-digit window with the retrieved random number.

At this point the process has reached the left end of the clear text and may continue similarly, while shifting the 6-digit window from left to right.

At operation 374, the process may use the value of the 6-digit window, "333333", as an index into reverse token table 395, retrieve the random number at that index, "1222222", and replace the value of the 6-digit window with the retrieved random number. At operation 376, the process may shift the 6-digit window one digit to the right. At operation 378, the process may use the value of the 6-digit window, "222222", as an index into reverse token table 395, retrieve the random number at that index, "211111", and replace the value of the 6-digit window with the retrieved random number. At operation 380, the process may shift the 6-digit window one digit to the right. At operation 382, the process may use the value of the 6-digit window, "111111", as an index into reverse token table 395, retrieve the random number at that index, "345678", and replace the value of the 6-digit window with the retrieved random number.

At this point the process has reached the right end of the tokenized value and is complete, resulting in the original clear text value "12345678."

FIG. 3E depicts an example token table file 220 stored on disk and employed in a method of securing data by stateless tokenization, according to one or more embodiments. As shown in FIG. 3E, token table file 220 may include the contents of a token table 225, including a random number value 320 at each index 315. Token table file 220 may further include a hash 392 of the contents of token table 225. The token table 225 and hash 392 may be encrypted. The encrypted data may be encoded.

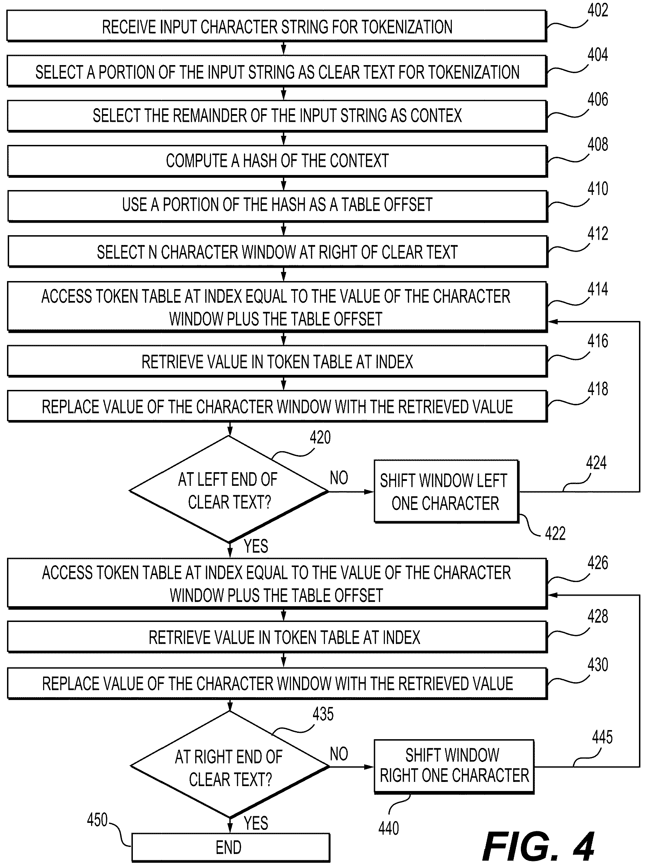

FIG. 4 depicts a flowchart of a method of securing data by stateless tokenization, according to one or more embodiments. As shown in FIG. 4, in operation 402, the tokenization service may receive an input character string for tokenization. In operation 404, the tokenization service may select a portion of the input string as clear text for tokenization, and, in operation 406, the tokenization service may select the remainder of the input string as a context. The context may be extended by an additional string, such as a system ID, an institution/client ID, or other group or global value. In operation 408, the tokenization service may compute a hash of the context. In operation 410, the tokenization service may use a portion of the hash as a table offset for subsequent table lookup operations. In operation 412, the tokenization service may select an N-character window at one end of the clear text as a starting point for the tokenization. In the description that follows, the right end of clear text is used as the starting point and the process moves initially to the left through the clear text. However, the process could, alternatively, begin at the left end of the clear text and move initially to the right through the clear text. In operation 414, the tokenization service may access a token table at an index equal to the value of the character window plus the table offset. In operation 416, the tokenization service may retrieve a value in the token table at the index. In operation 418, the tokenization service may replace value of the character window with the retrieved value from the token table.

In operation 420, the tokenization service may determine whether the process has reached the left end of the clear text. If the process has reached the left end of the clear text then, in operation 422, the tokenization service may continue to operation 426. If the process has not reached the left end of the clear text then, in operation 422, the tokenization service may shift the window left one character within the clear text and, in operation 424, the tokenization service may return to operation 414.

In operation 426, the tokenization service may access the token table at an index equal to the value of the character window plus the table offset. In operation 428, the tokenization service may retrieve a value in the token table at the index. In operation 430, the tokenization service may replace the value of the character window with the retrieved value from the token table.

In operation 435, the tokenization service may determine whether the process has reached the right end of the clear text. If the process has reached the right end of the clear text then the tokenization service may continue to operation 450. If the process has not reached the right end of the clear text then, in operation 440, the tokenization service may shift the window right one character, and, in operation 445, the tokenization service may return to operation 426.

In operation 450, the process may end, and the tokenization service may return the tokenized character string. Alternatively, the method of FIG. 4 may be applied to the tokenized character string, using the same token file or another token file, to tokenize the tokenized character string in order to provide even greater security. The same process may be repeated again on the resulting tokenized character string, etc.

In addition to the tokenization provided by the methods discussed above, additional metadata may be encoded into the tokenized values. Such metadata encoding may preserve the length of the clear text and tokenized value and may, for example, provide an indication that that a string is a token as compared to a clear text, identify the token table that was used to generate the token. Such an identifier may facilitate a rotation of token tables.

Using the techniques discussed above, there is not necessarily a need to rotate or change token tables, but an application may optionally choose to do so. Two or more tables, such as, for example, tables a and b, may be sufficient to implement a token table rotation scheme. However, examples discussed below provide an encoding sufficient to support up to 7 token tables used in rotation. In the examples discussed below, the metadata is encoded in the last 3 digits of the tokenized value to preserve the use of the first digits for file partitioning (sharding), which is discussed in greater detail below.

Examples are provided for metadata encoding for decimal and alphanumeric tokenization.

For decimal token metadata encoding, a token table ID (such as, for example, a,b,c,d,e,f, or g) may be encoded in the last three digits of the token by converting the last three digits of the tokenized value from a decimal (base 10) number to a two-digit base 62 number and replacing the last three digits of the token with a one letter token table ID followed by the two-digit base64 number. This encoding preserves the token length and expands the token alphabet to alphanumeric. For example, for a token value of "587315907" a token with metadata may be "587315aeD" where "907" in base 10 is replaced by "eD" base 62 and "a" is the token table ID.

For alphanumeric token metadata encoding, a token table ID(such as, for example, a,b,c,d,e,f, or g) may be represented as 1-7 in binary (000, 001, 010, ... 111), and encoded in the last three bytes of the token by adding 128 to the bytes to represent a binary digit 1. This encoding may preserve the token length and may expand the token alphabet to binary. For example, for a token value of "iQttOS9VZEwByTvRbZC", a token table ID 'b' may be represented as decimal 2 or 010 in binary. The last three characters of the token are "bZC". For adding metadata to the token value, 'b', ASCII code 98, may remain unchanged, thus encoding the first binary digit 0 (the fact that it is less than 128 tells us it represents binary 0). The next character, 'Z', has an ASCII code of 90. To encode the second binary digit 1, 128 may be added to 90, giving 218, which is 'DA' in hexadecimal and fits into one byte. The last character, 'C', may remain unchanged, thus encoding the third binary digit 0. The resulting token with metadata, may then be "iQttOS9VZEwByTvRb[0xDA]C ", where [0xDA] represents 218 (which is not a printable character).

Tokenized values, such as may be provided by one or more embodiments, may be employed to efficiently partition large data across multiple storage locations, such as physical disks, regions, etc. For example, there may be a need to partition a file or a database table across multiple physical disks. Such partitions are also known as shards. Partitioning may allow scaling of an application horizontally and may improve application performance by accessing multiple disks in parallel. One practical problem, however, is how to distribute the records evenly across all partitions. For example, consider a large database having a Primary Account Number (PAN) (i.e. debit/credit card) the primary key of the file. The PANs may not evenly be distributed, and as new PANs are created and added to the file, the partitions may become unbalanced, possibly resulting in disk space and performance issues. Tokenization of the PANs using the one or more embodiments discussed above may allow for efficient balancing of the database because the PAN tokens are evenly distributed random numbers. For example, partition 1 may include all records with primary key starting with "000" and less than "333", partition 2 may include all records with primary key starting with "333" and less than "666", and partition 3 may include all records with primary key starting with "666" and above. Newly added PANs and records will be evenly distributed across the partitions because of the random number attribute of the tokenized PAN values.

By using the techniques discussed above, the clear text to be tokenized may be replaced by a cryptographically secure tokenized text by using a limited size static token table. The static token table may avoid use of an ever-growing token database. The resulting tokenized text may be indistinguishable from random permutations, while preserving the format and length of the clear text, such as by preserving non-alphabet characters in the tokenized value. The process may allow for context such that tokenized values may depend on a clear text context associated with the tokenized text. Numeric and alphanumeric tokenization may be supported. The process may provide collision free tokenization in a distributed and portable implementation that is horizontally scalable. The process may provide fast in-memory tokenization and de-tokenization operations with no disk I/O. The process may protect the token tables in memory and in dump files, and allow for a debug-attack-resistant implementation.

Static token table files on disk may employ secure software encryption and periodic re-encryption, such that export of the static token tables to other severs/regions may be provided under a one-time use export key.

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer," a "computing machine," a "computing platform," a "computing device," or a "server" may include one or more processors.

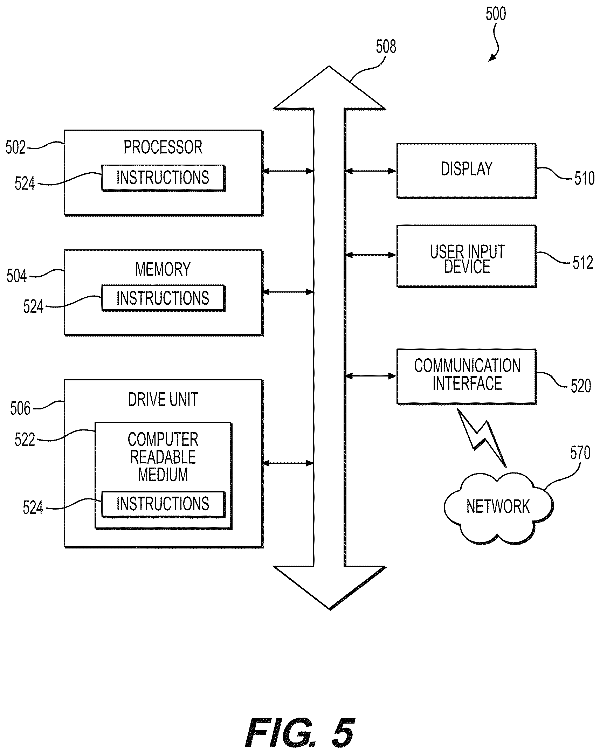

FIG. 5 illustrates an implementation of a general computer system designated 500. The computer system 500 can include a set of instructions that can be executed to cause the computer system 500 to perform any one or more of the methods or computer based functions disclosed herein. The computer system 500 may operate as a standalone device or may be connected, e.g., using a network, to other computer systems or peripheral devices.

In a networked deployment, the computer system 500 may operate in the capacity of a server or as a client user computer in a server-client user network environment, or as a peer computer system in a peer-to-peer (or distributed) network environment. The computer system 500 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 500 can be implemented using electronic devices that provide voice, video, or data communication. Further, while a single computer system 500 is illustrated, the term "system" shall also be taken to include any collection of systems or sub-systems that individually or jointly execute a set, or multiple sets, of instructions to perform one or more computer functions.

As illustrated in FIG. 5, the computer system 500 may include a processor 502, e.g., a central processing unit (CPU), a graphics processing unit (GPU), or both. The processor 502 may be a component in a variety of systems. For example, the processor 502 may be part of a standard personal computer or a workstation. The processor 502 may be one or more general processors, digital signal processors, application specific integrated circuits, field programmable gate arrays, servers, networks, digital circuits, analog circuits, combinations thereof, or other now known or later developed devices for analyzing and processing data. The processor 502 may implement a software program, such as code generated manually (i.e., programmed).

The computer system 500 may include a memory 504 that can communicate via a bus 508. The memory 504 may be a main memory, a static memory, or a dynamic memory. The memory 504 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 504 includes a cache or random-access memory for the processor 502. In alternative implementations, the memory 504 is separate from the processor 502, such as a cache memory of a processor, the system memory, or other memory. The memory 504 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 504 is operable to store instructions executable by the processor 502. The functions, acts or tasks illustrated in the figures or described herein may be performed by the programmed processor 502 executing the instructions stored in the memory 504. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 500 may further include a display unit 510, such as a liquid crystal display (LCD), an organic light emitting diode (OLED), a flat panel display, a solid-state display, a cathode ray tube (CRT), a projector, a printer or other now known or later developed display device for outputting determined information. The display 510 may act as an interface for the user to see the functioning of the processor 502, or specifically as an interface with the software stored in the memory 504 or in the drive unit 506.

Additionally or alternatively, the computer system 500 may include an input device 512 configured to allow a user to interact with any of the components of system 500. The input device 512 may be a number pad, a keyboard, or a cursor control device, such as a mouse, or a joystick, touch screen display, remote control, or any other device operative to interact with the computer system 500.

The computer system 500 may also or alternatively include a disk or optical drive unit 506. The disk drive unit 506 may include a computer-readable medium 522 in which one or more sets of instructions 524, e.g. software, can be embedded. Further, the instructions 524 may embody one or more of the methods or logic as described herein. The instructions 524 may reside completely or partially within the memory 504 and/or within the processor 502 during execution by the computer system 500. The memory 504 and the processor 502 also may include computer-readable media as discussed above.

In some systems, a computer-readable medium 522 includes instructions 524 or receives and executes instructions 524 responsive to a propagated signal so that a device connected to a network 570 can communicate voice, video, audio, images, or any other data over the network 570. Further, the instructions 524 may be transmitted or received over the network 570 via a communication port or interface 520, and/or using a bus 508. The communication port or interface 520 may be a part of the processor 502 or may be a separate component. The communication port 520 may be created in software or may be a physical connection in hardware. The communication port 520 may be configured to connect with a network 570, external media, the display 510, or any other components in system 500, or combinations thereof. The connection with the network 570 may be a physical connection, such as a wired Ethernet connection or may be established wirelessly as discussed below. Likewise, the additional connections with other components of the system 500 may be physical connections or may be established wirelessly. The network 570 may alternatively be directly connected to the bus 508.

While the computer-readable medium 522 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 522 may be non-transitory, and may be tangible.

The computer-readable medium 522 can include a solid-state memory such as a memory card or other package that houses one or more non-volatile read-only memories. The computer-readable medium 522 can be a random-access memory or other volatile re-writable memory. Additionally or alternatively, the computer-readable medium 522 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The computer system 500 may be connected to one or more networks 570. The network 570 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 570 may include wide area networks (WAN), such as the Internet, local area networks (LAN), campus area networks, metropolitan area networks, a direct connection such as through a Universal Serial Bus (USB) port, or any other networks that may allow for data communication. The network 570 may be configured to couple one computing device to another computing device to enable communication of data between the devices. The network 570 may generally be enabled to employ any form of machine-readable media for communicating information from one device to another. The network 570 may include communication methods by which information may travel between computing devices. The network 570 may be divided into sub-networks. The sub-networks may allow access to all of the other components connected thereto or the sub-networks may restrict access between the components. The network 570 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component/object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

It should be appreciated that in the above description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures, and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still cooperate or interact with each other.

Thus, while there has been described what are believed to be the preferred embodiments of the invention, those skilled in the art will recognize that other and further modifications may be made thereto without departing from the spirit of the invention, and it is intended to claim all such changes and modifications as falling within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

The following paragraphs provide a list of additional embodiments which may serve as basis for claims in this application or in any subsequently filed divisional application(s).
Embodiment 1: A computer-implemented method for securing data by stateless tokenization, the method comprising: receiving a character string; selecting a character window at a starting point within the character string; accessing a token table at an index equal to a value of the character window; retrieving, from the token table at the index, a first tokenized value corresponding to the value of the character window; replacing the value of the character window within the character string with the retrieved first tokenized value; shifting the character window within the character string by one character in a first direction; accessing the token table at the index equal to the value of the shifted character window; retrieving, from the token table at the index, a second tokenized value corresponding to the value of the shifted character window; replacing the value of the shifted character window within the character string with the retrieved second tokenized value; shifting the shifted character window within the character string by one character in a second direction; accessing the token table at the index equal to the value of the shifted character window; retrieving, from the token table at the index, a third tokenized value corresponding to the value of the shifted character window; replacing the value of the shifted character window within the character string with the retrieved third tokenized value; and returning the character string as a tokenized character string.
Embodiment 2: The computer-implemented method of Embodiment 1, wherein the first direction is to the left and the second direction is to the right.
Embodiment 3: The computer-implemented method of Embodiment 1, further comprising: selecting a portion of the character string as a clear text for tokenization; and selecting a remainder of the character string as a context, wherein the starting point is within the clear text.
Embodiment 4: The computer-implemented method of Embodiment 1, wherein the shifting the character window within the character string by one character in the first direction is repeated until the character window is at a stopping point within the character string.
Embodiment 5: The computer-implemented method of Embodiment 3, further comprising: computing a hash of the context; and selecting a portion of the hash as a table index to retrieve a random number as a table offset, wherein the table offset is added to the index when accessing the token table.
Embodiment 6: The computer-implemented method of Embodiment 1, wherein the token table comprises bⁿ random numbers, ranging from 0 to bⁿ-1, where n is a size of the character window and b is a size of an alphabet base b for the character string.
Embodiment 7: The computer-implemented method of Embodiment 1, further comprising: receiving an encrypted payment payload in response to a transaction initiated by a consumer at a merchant, wherein the encrypted payment payload comprises a primary account number (PAN) of a finance account of the consumer; setting the value of the character string to the PAN; transmitting the tokenized character string to the merchant; receiving an authorization request for the transaction, the authorization request comprising the tokenized character string; requesting authorization for the transaction from an issuer financial institution of the finance account of the consumer; receiving an authorization decision for the transaction from the issuer financial institution; and transmitting an authorization response to the merchant.
Embodiment 8: A system for securing data by stateless tokenization, the system comprising: a data storage device storing instructions for securing data by stateless tokenization in an electronic storage medium; and a processor configured to execute the instructions to perform a method including: receiving a character string; selecting a character window at a starting point within the character string; accessing a token table at an index equal to a value of the character window; retrieving, from the token table at the index, a first tokenized value corresponding to the value of the character window; replacing the value of the character window within the character string with the retrieved first tokenized value; shifting the character window within the character string by one character in a first direction; accessing the token table at the index equal to the value of the shifted character window; retrieving, from the token table at the index, a second tokenized value corresponding to the value of the shifted character window; replacing the value of the shifted character window within the character string with the retrieved second tokenized value; shifting the shifted character window within the character string by one character in a second direction; accessing the token table at the index equal to the value of the shifted character window; retrieving, from the token table at the index, a third tokenized value corresponding to the value of the shifted character window; replacing the value of the shifted character window within the character string with the retrieved third tokenized value; and returning the character string as a tokenized character string.
Embodiment 9: The system of Embodiment 8, wherein the first direction is to the left and the second direction is to the right.
Embodiment 10: The system of Embodiment 8, wherein the system is further configured for: selecting a portion of the character string as a clear text for tokenization; and selecting a remainder of the character string as a context, wherein the starting point is within the clear text.
Embodiment 11: The system of Embodiment 8, wherein the shifting the character window within the character string by one character in the first direction is repeated until the character window is at a stopping point within the character string.
Embodiment 12: The system of Embodiment 10, wherein the system is further configured for: computing a hash of the context; and selecting a portion of the hash as a table index to retrieve a random number as a table offset, wherein the table offset is added to the index when accessing the token table.
Embodiment 13: The system of Embodiment 8, wherein the token table comprises bⁿ random numbers, ranging from 0 to bⁿ-1, where n is a size of the character window and b is a size of an alphabet base b for the character string.
Embodiment 14: The system of Embodiment 8, wherein the system is further configured for: receiving an encrypted payment payload in response to a transaction initiated by a consumer at a merchant, wherein the encrypted payment payload comprises a primary account number (PAN) of a finance account of the consumer; setting the value of the character string to the PAN; transmitting the tokenized character string to the merchant; receiving an authorization request for the transaction, the authorization request comprising the tokenized character string; requesting authorization for the transaction from an issuer financial institution of the finance account of the consumer; receiving an authorization decision for the transaction from the issuer financial institution; and transmitting an authorization response to the merchant.
Embodiment 15: A non-transitory machine-readable medium storing instructions that, when executed by a computing system, causes the computing system to perform a method for securing data by stateless tokenization, the method including: receiving a character string; selecting a character window at a starting point within the character string; accessing a token table at an index equal to a value of the character window; retrieving, from the token table at the index, a first tokenized value corresponding to the value of the character window; replacing the value of the character window within the character string with the first retrieved tokenized value; shifting the character window within the character string by one character in a first direction; accessing the token table at the index equal to the value of the shifted character window; retrieving, from the token table at the index, a second tokenized value corresponding to the value of the shifted character window; replacing the value of the shifted character window within the character string with the retrieved second tokenized value; shifting the shifted character window within the character string by one character in a second direction; accessing the token table at the index equal to the value of the shifted character window; retrieving, from the token table at the index, a third tokenized value corresponding to the value of the shifted character window; replacing the value of the shifted character window within the character string with the retrieved third tokenized value; and returning the character string as a tokenized character string.
Embodiment 16: The non-transitory machine-readable medium of Embodiment 15, wherein the first direction is to the left and the second direction is to the right.
Embodiment 17: The non-transitory machine-readable medium of Embodiment 15, the method further comprising: selecting a portion of the character string as a clear text for tokenization; and selecting a remainder of the character string as a context, wherein the starting point is within the clear text.
Embodiment 18: The non-transitory machine-readable medium of Embodiment 15, wherein the shifting the character window within the character string by one character in the first direction is repeated until the character window is at a stopping point within the character string.
Embodiment 19: The non-transitory machine-readable medium of Embodiment 17, the method further comprising: computing a hash of the context; and selecting a portion of the hash as a table index to retrieve a random number as a table offset, wherein the table offset is added to the index when accessing the token table.
Embodiment 20: The non-transitory machine-readable medium of Embodiment 15, the method further comprising: receiving an encrypted payment payload in response to a transaction initiated by a consumer at a merchant, wherein the encrypted payment payload comprises a primary account number (PAN) of a finance account of the consumer; setting the value of the character string to the PAN; transmitting the tokenized character string to the merchant; receiving an authorization request for the transaction, the authorization request comprising the tokenized character string; requesting authorization for the transaction from an issuer financial institution of the finance account of the consumer; receiving an authorization decision for the transaction from the issuer financial institution; and transmitting an authorization response to the merchant.

## Claims

1. A computer-implemented method for securing data by stateless tokenization, the method comprising:
accessing a token table at a table offset plus an index equal to a value of the character window within a character string;
replacing the value of the character window within the character string with a first tokenized value from the token table, the first tokenized value corresponding to the value of the character window;
shifting the character window within the character string in a first direction;
accessing the token table at the table offset plus an index equal to the value of the shifted character window;
replacing the value of the shifted character window within the character string with a second tokenized value from the token table, the second tokenized value corresponding to the value of the shifted character window;
shifting the shifted character window within the character string in a second direction;
accessing the token table at the table offset plus an index equal to the value of the shifted character window;
replacing the value of the shifted character window within the character string with a third tokenized value from the token table, the third tokenized value corresponding to the value of the shifted character window;
returning the character string as a tokenized character string
selecting a portion of the character string as a clear text for tokenization;
selecting a remainder of the character string as a context;
computing a hash of the context; and
selecting a portion of the hash as a table index to retrieve a random number as a table offset, wherein the table offset is added to the index when accessing the token table.

2. The computer-implemented method of claim 1, wherein the first and second directions are opposite one another.

3. The computer-implemented method of claim 1, wherein the shifting the character window within the character string in the first direction is repeated until the character window is at a stopping point within the character string.

4. The computer-implemented method of claim 1, wherein the token table comprises bⁿ random numbers, ranging from 0 to bⁿ-1, where n is a size of the character window and b is a size of an alphabet base b for the character string.

5. The computer-implemented method of claim 1, further comprising:
receiving an encrypted payment payload in response to a transaction initiated by a consumer at a merchant, wherein the encrypted payment payload comprises a primary account number (PAN) of a finance account of the consumer;
setting the value of the character string to the PAN;
transmitting the tokenized character string to the merchant;
receiving an authorization request for the transaction, the authorization request comprising the tokenized character string;
requesting authorization for the transaction from an issuer financial institution of the finance account of the consumer;
receiving an authorization decision for the transaction from the issuer financial institution; and
transmitting an authorization response to the merchant.

6. A system for securing data by stateless tokenization, the system comprising:
a data storage device storing instructions for securing data by stateless tokenization in an electronic storage medium; and
a processor configured to execute the instructions to perform a method including:
accessing a token table at a table offset plus an index equal to a value of a character window within a character string;
replacing the value of the character window within the character string with a first tokenized value from the token table, the first tokenized value corresponding to the value of the character window;
shifting the character window within the character string in a first direction;
accessing the token table at the table offset plus an index equal to the value of the shifted character window;
replacing the value of the shifted character window within the character string with a second tokenized value from the token table, the second tokenized value corresponding to the value of the shifted character window;
shifting the shifted character window within the character string in a second direction;
accessing the token table at the table offset plus an index equal to the value of the shifted character window;
replacing the value of the shifted character window within the character string with a third tokenized value from the token table, the third tokenized value corresponding to the value of the shifted character window;
returning the character string as a tokenized character string;
selecting a portion of the character string as a clear text for tokenization;
selecting a remainder of the character string as a context;
computing a hash of the context; and
selecting a portion of the hash as a table index to retrieve a random number as a table offset, wherein the table offset is added to the index when accessing the token table.

7. The system of claim 6, wherein the first and second directions are opposite one another.

8. The system of claim 6, wherein the shifting the character window within the character string in the first direction is repeated until the character window is at a stopping point within the character string.

9. The system of claim 6, wherein the token table comprises bⁿ random numbers, ranging from 0 to bⁿ-1, where n is a size of the character window and b is a size of an alphabet base b for the character string.

10. The system of claim 6, wherein the system is further configured for:
receiving an encrypted payment payload in response to a transaction initiated by a consumer at a merchant, wherein the encrypted payment payload comprises a primary account number (PAN) of a finance account of the consumer;
setting the value of the character string to the PAN;
transmitting the tokenized character string to the merchant;
receiving an authorization request for the transaction, the authorization request comprising the tokenized character string;
requesting authorization for the transaction from an issuer financial institution of the finance account of the consumer;
receiving an authorization decision for the transaction from the issuer financial institution; and
transmitting an authorization response to the merchant.

11. A non-transitory machine-readable medium storing instructions that, when executed by a computing system, causes the computing system to perform a method for securing data by stateless tokenization, the method including:
accessing a token table at a table offset plus an index equal to a value of a character window within a character string;
replacing the value of the character window within the character string with a first tokenized value from the token table, the first tokenized value corresponding to the value of the character window;
shifting the character window within the character string in a first direction;
accessing the token table at the table offset plus an index equal to the value of the shifted character window;
replacing the value of the shifted character window within the character string with a second tokenized value from the token table, the second tokenized value corresponding to the value of the shifted character window;
shifting the shifted character window within the character string in a second direction;
accessing the token table at the table offset plus an index equal to the value of the shifted character window;
replacing the value of the shifted character window within the character string with a third tokenized value from the token table, the third tokenized value corresponding to the value of the shifted character window;
returning the character string as a tokenized character string;
selecting a portion of the character string as a clear text for tokenization;
selecting a remainder of the character string as a context;
computing a hash of the context; and
selecting a portion of the hash as a table index to retrieve a random number as a table offset, wherein the table offset is added to the index when accessing the token table.

12. The medium of claim 11, wherein the first and second directions are opposite one another.

13. The medium of claim 11, wherein the shifting the character window within the character string in the first direction is repeated until the character window is at a stopping point within the character string.

14. The medium of claim 11, wherein the token table comprises bⁿ random numbers, ranging from 0 to bⁿ-1, where n is a size of the character window and b is a size of an alphabet base b for the character string.

15. The medium of claim 11, wherein the method further comprises:
receiving an encrypted payment payload in response to a transaction initiated by a consumer at a merchant, wherein the encrypted payment payload comprises a primary account number (PAN) of a finance account of the consumer;
setting the value of the character string to the PAN;
transmitting the tokenized character string to the merchant;
receiving an authorization request for the transaction, the authorization request comprising the tokenized character string;
requesting authorization for the transaction from an issuer financial institution of the finance account of the consumer;
receiving an authorization decision for the transaction from the issuer financial institution; and
transmitting an authorization response to the merchant.
